(19) Europäisches Patentamt
European Patent Office
Office européen des brevets

(11) Veröffentlichungsnummer: **0 292 955 B1**

(12) # EUROPÄISCHE PATENTSCHRIFT

(45) Veröffentlichungstag der Patentschrift: **17.06.92**

(51) Int. Cl.[5]: **C09B 62/51**, D06P 1/384

(21) Anmeldenummer: **88108382.8**

(22) Anmeldetag: **26.05.88**

Die Akte enthält technische Angaben, die nach dem Eingang der Anmeldung eingereicht wurden und die nicht in dieser Patentschrift enthalten sind.

(54) **Wasserlösliche Monoazo-naphtholcarbonsäure-Verbindungen, Verfahren zu ihrer Herstellung und ihre Verwendung als Farbstoffe.**

(30) Priorität: **29.05.87 DE 3718180**

(43) Veröffentlichungstag der Anmeldung:
**30.11.88 Patentblatt 88/48**

(45) Bekanntmachung des Hinweises auf die Patenterteilung:
**17.06.92 Patentblatt 92/25**

(84) Benannte Vertragsstaaten:
**BE CH DE FR GB IT LI**

(56) Entgegenhaltungen:
**DE-C- 960 534**
**DE-C- 965 902**
**FR-A- 641 816**

(73) Patentinhaber: **HOECHST AKTIENGESELLSCHAFT**
**Postfach 80 03 20**
**W-6230 Frankfurt am Main 80(DE)**

(72) Erfinder: **Springer, Hartmut, Dr.**
**Am Erdbeerstein 27**
**W-6240 Königstein/Taunus(DE)**
Erfinder: **Hussong, Kurt, Dr.**
**Am Flachsland 56**
**W-6233 Kelkheim (Taunus)(DE)**

**EP 0 292 955 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Aus dem Beispiel 4 der deutschen Patentschrift Nr. 960 534 und aus dem Beispiel 43 der deutschen Patentschrift Nr. 965 902 sind faserreaktive Azofarbstoffe bekannt, die in der Diazokomponente eine Vinylsulfonyl- bzw. $\beta$-Sulfatoethylsulfonyl-Gruppe und als Kupplungskomponente die 2-Naphthol-6-sulfonsäure bzw. 2-Naphthol-3-carbonsäure besitzen.

Andere Farbstoffe mit einer 2-Hydroxy-naphthalin-6-carbonsäure als Kupplungskomponente, die jedoch keine faserreakive Gruppe besitzen und als Säurefarbstoffe, gegebenenfalls in Gegenwart eines Chromsalzes, zum Färben von Wolle geeignet sind, sind aus der französischen Patentschrift Nr. 641 816 bekannt.

Mit der vorliegenden Erfindung wurden nunmehr neue wasserlösliche Monoazoverbindungen gefunden, die verbesserte Eigenschaften besitzen und der allgemeinen Formel (1)

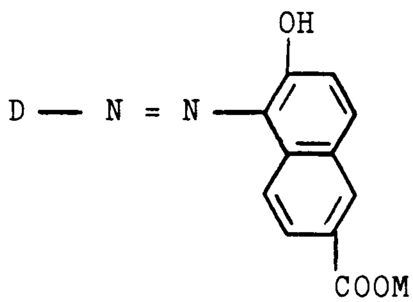

(1)

entsprechen, worin bedeuten:

M ist ein Wasserstoffatom oder ein Alkalimetall, wie Natrium, Kalium oder Lithium;

D ist eine Gruppe der allgemeinen Formel (2a) oder (2c)

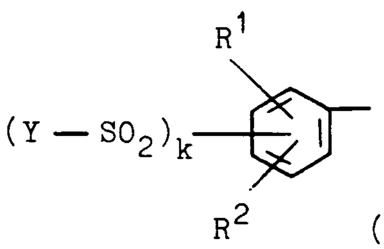

(2a)

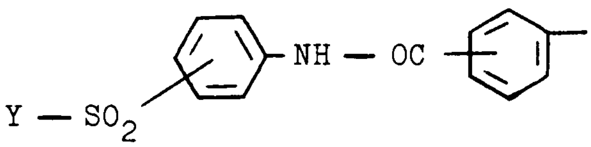

(2c)

in welchen

$R^1$ ein Wasserstoffatom, die Cyangruppe, eine Alkylgruppe von 1 bis 4 C-Atomen ist, die durch eine Sulfo-, Carboxy- oder Sulfatogruppe substituiert sein kann, oder eine Hydroxygruppe, eine Alkoxygruppe von 1 bis 4 C-Atomen, die durch eine Sulfo-, Carboxy- oder Sulfatogruppe substituiert sein kann, eine Sulfogruppe, eine Carboxygruppe, ein Halogenatom, wie ein Brom- oder Chloratom, oder eine Gruppe der allgemeinen Formel (3)

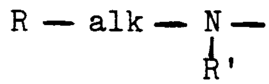 (3)

ist, in welcher

alk eine Alkylengruppe von 2 bis 4 C-Atomen, bevorzugt die Ethylengruppe, ist,

R für die Sulfo-, Carboxy-, Sulfato- oder Phosphatogruppe steht und

R′ ein Wasserstoffatom oder die Methyl- oder Ethylgruppe ist,

$R^2$ ein Wasserstoffatom oder eine Alkoxygruppe von 1 bis 4 C-Atomen oder eine Alkylgruppe von 1 bis 4 C-Atomen oder eine Sulfogruppe ist,

Y für die Vinylgruppe steht oder eine Ethylgruppe ist, die in $\beta$-Stellung einen durch Alkali einwirkung unter Bildung der Vinylgruppe eliminierbaren Substituenten enthält, und

k die Zahl 1 oder 2, bevorzugt 1, bedeutet.

Bevorzugt von den Alkoxygruppen sind die Ethoxygruppe und insbesondere die Methoxygruppe. Bevorzugt von den Alkylgruppen sind die Ethylgruppe und insbesondere die Methylgruppe. Bevorzugt ist M ein Wasserstoffatom und insbesondere ein Alkalimetall.

Von den für $R^1$ genannten, durch eine wasserlöslich machende Gruppe substituierten Alkoxy- und Alkylaminogruppen sind beispielsweise die $\beta$-Sulfatoethylamino-, die N-Methyl-N-($\beta$-sulfatoethyl)-amino- und die $\beta$-Sulfatoethoxy-Gruppe als bevorzugt hervorzuheben.

Bevorzugt ist $R^2$ ein Wasserstoffatom, und bevorzugt ist $R^1$ ein Wasserstoffatom oder eine Methoxygruppe. Bevorzugt steht die Gruppe Y-$SO_2$- im Formelrest (2a) in meta- oder para-Stellung zur freien, zur Azogruppe führenden Bindung.

Insbesondere diejenigen erfindungsgemäßen Verbindungen können hervorgehoben werden, in denen D für den 4-($\beta$-Sulfatoethylsulfonyl)-phenyl-, den 4-($\beta$-Thiosulfatoethylsulfonyl)-phenyl- oder den 2-Sulfo-5-($\beta$-sulfatoethylsulfonyl)-phenyl-Rest steht.

Substituenten, die gemäß dem Formelglied Y in $\beta$-Stellung der Ethylgruppe gebunden sind und durch ein Alkali unter Bildung der Vinylgruppe eliminiert werden können, sind beispielsweise Alkanoyloxygruppen von 2 bis 5 C-Atomen, wie die Acetyloxygruppe, Aroyloxygruppen, wie die Benzoyloxy-, Sulfobenzoyloxy- oder Carboxybenzoyloxy-Gruppe, Dialkylaminogruppen mit Alkylresten von 1 bis 4 C-Atomen, wie insbesondere die Dimethylamino- und Diethylaminogruppe, Trialkylammoniumgruppen mit Alkylresten von 1 bis 4 C-Atomen, wie die Trimethylammoniumgruppe, das Chloratom, das Bromatom, Alkylsulfonyloxygruppen mit Alkylresten von 1 bis 4 C-Atomen, eine Phosphatogruppe, eine Thiosulfatogruppe oder eine Sulfatogruppe. Bevorzugt steht Y für die Vinylgruppe und die $\beta$-Phosphatoethyl-Gruppe, insbesondere bevorzugt für die $\beta$-Thiosulfatoethyl-Gruppe und ganz besonders bevorzugt für die $\beta$-Sulfatoethyl-Gruppe.

Sulfogruppen sind Gruppen entsprechend der allgemeinen Formel $-SO_3M$ , Carboxygruppen sind Gruppen entsprechend der allgemeinen Formel -COOM , Sulfatogruppen sind Gruppen entsprechend der allgemeinen Formel $-OSO_3M$ , Thiosulfatogruppen sind Gruppen entsprechend der allgemeinen Formel $-S-SO_3M$ und Phosphatogruppen sind Gruppen entsprechend der allgemeinen Formel $-OPO_3M_2$ , wobei M die obengenannte Bedeutung hat.

Die vorliegende Erfindung betrifft weiterhin Verfahren zur Herstellung der Verbindungen der allgemeinen Formel (1). Diese sind dadurch gekennzeichnet, daß man die Diazoniumverbindung eines aromatischen Amins der allgemeinen Formel (4a) oder (4c)

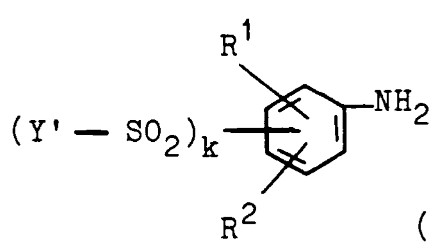

(4a)

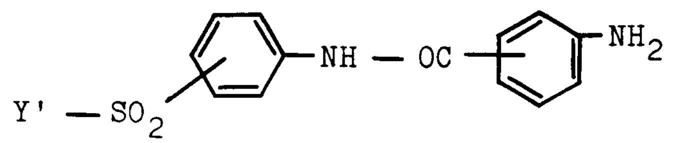

(4c)

in welchen $R^1$, $R^2$ und k die obengenannten Bedeutungen haben und Y′ eine der für Y genannten Bedeutungen besitzt oder die β-Hydroxyethyl-Gruppe ist,
mit 2-Hydroxy-naphthalin-6-carbonsäure oder einem Salz dieser Carbonsäure kuppelt, und im Falle, daß Y′ eine β-Hydroxyethyl-Gruppe bedeutet, die gebildete Azoverbindung mit dieser β-Hydroxyethylsulfonyl-Gruppe mit Hilfe eines üblichen Acylierungs- oder Veresterungsmittels in eine Azoverbindung der allgemeinen Formel (1) mit Y gleich einer Ethylgruppe, die in β-Stellung einen anorganischen oder organischen Esterrest enthält, überführt.

Anorganische oder organische Esterreste sind insbesondere die bereits oben erwähnten Sulfato-, Phosphato-, Alkanoyloxy-, Benzoyloxy-, Alkylsulfonyloxy-, Phenylsulfonyloxy- oder Toluylsulfonyloxy-Reste.

So können erfindungsgemäße Azoverbindungen mit Y gleich einer β-Sulfatoethyl- oder β-Phosphatoethyl-Gruppe in erfindungsgemäßer Weise hergestellt werden, indem man eine Azoverbindung, die der allgemeinen Formel (1) entspricht, in welcher jedoch Y für die β-Hydroxyethyl-Gruppe steht, analog bekannten Verfahrensweisen mit einem Sulfatisierungs-bzw. Phosphatisierungsmittel umsetzt.

Sulfatierungsmittel sind bekannt; sie sind beispielsweise konzentrierte Schwefelsäure und Schwefelsäuremonohydrat. Vorzugsweise erfolgt die Sulfatierung mittels konzentrierter Schwefelsäure bei einer Temperatur zwischen 0 und 40 °C oder mittels Schwefelsäuremonohydrat bei einer Temperatur zwischen 5 und 15 °C.

Phosphatierungsmittel sind ebenfalls bekannt; sie sind Phosphorsäure, Polyphosphorsäure, Phosphoroxychlorid oder Gemische dieser Säuren mit Phosphorpentoxid. Die Phosphatierungsreaktion mit diesen Agenzien erfolgt in der Regel zwischen 20 und 80 °C.

Erfindungsgemäße Azoverbindungen mit Y gleich einer Alkanoyloxygruppe können in gleicher Weise durch Umsetzung einer entsprechenden Azo-Ausgangsverbindung, die den β-Hydroxyethylsulfonyl-Rest enthält, mit einem Acylierungsmittel einer Alkancarbonsäure oder aromatischen Carbonsäure, wie beispielsweise Acetylchlorid, Eisessig, Acetanhydrid, Benzoylchlorid, hergestellt werden.

Von besonderem Interesse ist die erfindungsgemäße Herstellung von solchen Verbindungen der allgemeinen Formel (1), in welchen Y für die β-Thiosulfatoethyl-Gruppe steht. Diese gewinnt man neben der oben angegebenen Verfahrensweise der Umsetzung der Diazokomponenten entsprechend den Formeln (4) mit der 2-Naphthol-6-carbonsäure erfindungsgemäß auch in der Weise, daß man eine Verbindung entsprechend der allgemeinen Formel (1), in welcher Y für die β-Sulfatoethyl-Gruppe steht, zunächst im stark alkalischen Bereich, wie bei einem pH-Wert zwischen 10 und 13, und bei einer Temperatur zwischen 35 und 50 °C in die erfindungsgemäßen Vinylsulfonyl-Verbindung überführt, die Lösung sodann auf einen pH-Wert zwischen 4 und 6 einstellt und die Vinylsulfonyl-Verbindung mit Natriumthiosulfat zur β-Thiosulfatoethylsulfonyl-Verbindung umsetzt.

Die Verbindungen der allgemeinen Formeln (4) sind bekannt und in der Literatur zahlreich beschrieben. Ebenso ist die 2-Naphthol-6-carbonsäure als Zwischenprodukt bekannt (s. bspw. Europäische Patentschrift Nr. 0 053 824B1).

Diazokomponenten entsprechend den allgemeinen Formeln (4) sind beispielsweise 4-(β-Sulfatoethylsulfonyl)-anilin, 2-Sulfo-4-(β-sulfatoethylsulfonyl)-anilin, 3-(β-Sulfatoethylsulfonyl)-anilin, 2,4-Disulfo-5-(β-sulfatoethylsulfonyl)-anilin, 2-Sulfo-5-(β-sulfatoethylsulfonyl)-anilin, 2-Hydroxy-5-(β-sulfatoethylsulfonyl)-anilin, 2-Hydroxy-4-(β-sulfatoethylsulfonyl)-anilin, 4-Methoxy-3-(β-sulfatoethylsulfonyl)-anilin, 3-Methoxy-4-(β-sulfatoethylsulfonyl)-anilin, 2-Methoxy-5-(β-sulfatoethylsulfonyl)-anilin, 2-Methoxy-4-(β-sulfatoethylsulfonyl)-anilin, 4-Methyl-3-(β-sulfatoethylsulfonyl)-anilin, 2-(β-Sulfatoethylsulfonyl)-anilin, 2-Chlor-5-(β-sulfatoethylsulfonyl)-anilin, 4-Chlor-3-(β-sulfatoethylsulfonyl)-anilin, 5-Methyl-2-methoxy-4-(β-sulfatoethylsulfonyl)-anilin, 2,5-Dimethoxy-4-(β-sulfatoethylsulfonyl)-anilin, 2-Carboxy-5-(β-sulfatoethylsulfonyl)-anilin, 4-Amino-3′-(β-sulfatoethylsulfonyl)-benzoesäureanilid, 4-(β-Sulfatoethylamino)-3-(β-sulfatoethylsulfonyl)-anilin, 4-[N-Methyl,N-(β-sulfatoethyl)]-amino-3-(β-sulfatoethylsulfonyl)-anilin, 4-(β-Sulfatoethoxy)-3-(β-sulfatoethylsulfonyl)-anilin, 2,5-Bis-(β-sulfatoethylsulfonyl)-anilin und 3,4-Bis-(β-sulfatoethylsulfonyl)-anilin sowie beispielsweise deren β-Thiosulfatoethylsulfonyl- und β-Phosphatoethylsulfonyl-Derivate.

Die Diazotierungsreaktion der Ausgangsverbindungen entsprechend den allgemeinen Formeln (4) erfolgt in der Regel, analog bekannten Verfahrensweisen, durch Einwirkung salpetriger Säure in wäßrig-mineralsaurer Lösung bei Temperaturen unterhalb von 15 °C, wie bei einer Temperatur zwischen -5 °C und +10 °C. Die Kupplung des Diazoniumsalzes mit der 2-Naphthol-6-carbonsäure oder deren Salz wird im schwach

sauren bis neutralen Bereich, bevorzugt im schwach sauren Bereich, analog den bekannten Kupplungsreaktionen durchgeführt. Sofern die Ausgangsverbindungen der allgemeinen Formeln (4) bereits eine hochreaktive Gruppe $-SO_2-Y$ , wie die β-Sulfatoethylsulfonyl-Gruppe, enthalten, erfolgt die Kupplung bevorzugt bei einem pH-Wert zwischen 4 und 6,0, um eine Schädigung der faserreaktiven Gruppe zu vermeiden. Sofern jedoch Diazokomponenten eingesetzt werden, in welchen $Y'$ für die β-Hydroxyethyl-Gruppe steht, kann die Kupplung auch im stärker alkalischen Bereich durchgeführt werden, wie bei einem pH-Wert bis zu 9. Die Kupplungstemperatur liegt in der Regel zwischen 10 und 40 ° C.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Monoazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A.

Mit den erfindungsgemäßen Azoverbindungen werden sowohl auf carbonamidgruppenhaltigen Materialien, wie insbesondere auf Wolle, als auch auf hydroxygruppenhaltigem Material, wie insbesondere Cellulosefasermaterial gelbstichig bis blaustichig rote Färbungen und Drucke mit hoher Farbausbeute und gutem Farbaufbau erhalten, wobei die brillante Nuance auch in tiefen Tönen erhalten bleibt. Die Färbungen und Drucke besitzen gute Echtheitseigenschaften, wie gute Licht-und Naßechtheitseigenschaften und eine gute Plissierechtheit, Bügelechtheit und Reibechtheit.

Von den Färbungen und Drucken auf carbonamidgruppenhaltigem Material, wie insbesondere auf Wolle, können die Licht-, Wasch- und Naßlichtechtheiten hervorgehoben werden, selbst wenn auf eine ansonsten übliche ammoniakalische Nachbehandlung der gefärbten Ware verzichtet wird. Mit anderen faserreaktiven Wollfarbstoffen zeigen sie eine gute Kombinierbarkeit, was ein egales Färben der Faser ermöglicht. Ebenso läßt sich Material aus Wollfasern unterschiedlicher Provenienz mit den erfindungsgemäßen Azoverbindungen egal färben, wobei gegebenenfalls zur Verbesserung des Egalisierverhaltens ein übliches Egalisierhilfsmittel, wie beispielsweise N-Methyl-taurin zugesetzt werden kann.

Bevorzugt dienen die erfindungsgemäßen Azofarbstoffe zum Färben von Cellulosefasermaterialien. Von den hierauf erzielbaren guten Echtheitseigenschaften sind insbesondere die guten Waschechtheiten bei 60 bis 95 ° C, auch in Gegenwart von Perboraten, die sauren und alkalischen Walk-, Überfärbe- und Schweißechtheiten, die hohe Dampfbeständigkeit, die guten Alkali-, Säure-, Wasser- und Seewasserechtheiten und die gute Säurelagerbeständigkeit ("acid fading") beim Lagern von feuchtem, säurehaltigem, gefärbtem

Material (s. deutsche Auslegeschrift 2 322 236, Spalte 4, Zeilen 35 bis 42) hervorzuheben.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden aus wäßriger Lösung der Alkalimetallsalze bestimmt.

Beispiel 1

28,1 Teile 4-($\beta$-Sulfatoethylsulfonyl)-anilin werden bei 0 bis 5 °C in einer Lösung aus 200 Teilen Wasser und 30 Teilen konzentrierter wäßriger Salzsäure in üblicher Weise mit 21 Teilen einer wäßrigen 5n-Natriumnitritlösung diazotiert; überschüssiges Nitrit wird anschließend durch Amidosulfonsäure zerstört und der pH der Diazoniumsalzlösung mittels Natriumbicarbonat auf einen Wert von 4 gestellt. Sodann wird innerhalb von 15 Minuten bei 0 bis 10 °C eine Lösung aus 18,8 Teilen 2-Naphthol-6-carbonsäure in 200 Teilen Wasser und 9 Teilen einer 33%igen wäßrigen Natronlauge unter Einhaltung eines pH-Wertes von 6 zugegeben. Der Ansatz wird noch 3 Stunden nachgerührt und anschließend mit wäßriger 2n-Schwefelsäure auf einen pH-Wert von 5 gestellt. Durch Zugabe von 25 % Natriumchlorid, bezogen auf das Volumen des Ansatzes, wird die erfindungsgemäße Verbindung ausgesalzen und in üblicher Weise isoliert.

Es wird ein orangefarbenes, elektrolythaltiges (wie natriumchloridhaltiges) Pulver des Natriumsalzes der Verbindung der Formel

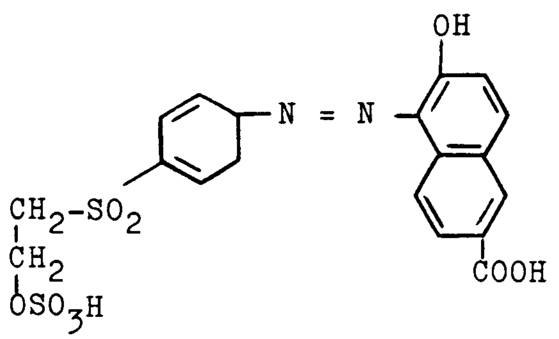

($\lambda_{max}$ = 479 nm)

erhalten. Diese erfindungsgemäße Verbindung besitzt sehr gute Farbstoffeigenschaften und liefert auf den in der Beschreibung genannten Materialien, wie insbesondere Cellulosefasermaterialien, farbstarke Färbungen und Drucke. Insbesondere bei der Anwendung von für faserreaktive Farbstoffe üblichen Applikations- und Fixiermethoden werden mit einem hohen Fixiergrad farbstarke, brillante orangene Färbungen mit guten Echtheitseigenschaften erhalten, von denen insbesondere die Licht-, Naßlicht- und Waschechtheiten hervorgehoben werden können.

Beispiele 2 bis 24

In den nachfolgenden Tabellenbeispielen sind weitere erfindungsgemäße Monoazoverbindungen entsprechend der allgemeinen Formel (1) anhand des Restes D- der variablen Diazokomponente beschrieben. Sie lassen sich in erfindungsgemäßer Weise, beispielsweise nach dem obigen Ausführungsbeispiel, durch Diazotierung des aus dem jeweiligen Tabellenbeispiel ersichtlichen aromatischen Amins D-$NH_2$ und Kupplung mit 2-Naphthol-carbonsäure als Kupplungskomponente herstellen. Sie besitzen faserreaktive Farbstoffeigenschaften und liefern auf den in der Beschreibung genannten Materialien, wie insbesondere Cellulosefasermaterialien, nach den für faserreaktive Farbstoffe üblichen Applikations- und Fixiermethoden farbstarke, echte Färbungen und Drucke in den in dem jeweiligen Tabellenbeispiel für Färbungen auf Baumwolle angegebenen Farbtönen.

| Bsp. | Rest D - | Farbton |
|---|---|---|
| 2 | 2-Sulfo-4-(ß-sulfatoethylsulfonyl)-phenyl | orange (477) |
| 3 | 2,4-Disulfo-5-(ß-sulfatoethylsulfonyl)-phenyl | orange (475) |
| 4 | 2-Sulfo-5-(ß-sulfatoethylsulfonyl)-phenyl | orange (473) |
| 5 | 2-Hydroxy-5-(ß-sulfatoethylsulfonyl)-phenyl | rotstichig orange (492) |
| 6 | 3-(ß-Sulfatoethylsulfonyl)-phenyl | orange |

| Bsp. | Rest D - | Farbton |
|---|---|---|
| 7 | 2-Hydroxy-4-(ß-sulfatoethylsulfonyl)-phenyl | rotorange (495) |
| 8 | 4-Methoxy-3-(ß-sulfatoethylsulfonyl)-phenyl | rot |
| 9 | 3-Methoxy-4-(ß-sulfatoethylsulfonyl)-phenyl | rot |
| 10 | 2-Methoxy-5-(ß-sulfatoethylsulfonyl)-phenyl | rot |
| 11 | 2-Methoxy-4-(ß-sulfatoethylsulfonyl)-phenyl | rot |
| 12 | 4-Methyl-3-(ß-sulfatoethylsulfonyl)-phenyl | orange |
| 13 | 2-(ß-Sulfatoethylsulfonyl)-phenyl | orange |
| 14 | 2-Chlor-5-(ß-sulfatoethylsulfonyl)-phenyl | orange |
| 15 | 4-Chlor-3-(ß-sulfatoethylsulfonyl)-phenyl | orange |
| 16 | 5-Methyl-2-methoxy-4-(ß-sulfatoethylsulfonyl)-phenyl | rot |
| 17 | 2,5-Dimethoxy-4-(ß-sulfatoethylsulfonyl)-phenyl | rot |
| 18 | 2-Carboxy-5-(ß-sulfatoethylsulfonyl)-phenyl | rot |
| 19 | 4-[3'-(ß-sulfatoethylsulfonyl)-phenyl]-amidocarbonyl-phenyl | orange |
| 20 | 4-(ß-Sulfatoethyl)-amino-3-(ß-sulfatoethylsulfonyl)-phenyl | orange |
| 21 | 4-[(N-Methyl,N-(ß-sulfatoethyl)]-amino-3-(ß-sulfatoethyl-sulfonyl)-phenyl | orange |
| 22 | 4-(ß-Sulfato-ethoxy)-3-(ß-sulfatoethylsulfonyl)-phenyl | orange |
| 23 | 2,5-Bis-(ß-sulfatoethylsulfonyl)-phenyl | orange |
| 24 | 3,4-Bis-(ß-sulfatoethylsulfonyl)-phenyl | orange |

**Patentansprüche**

**1.** Eine Verbindung, die der allgemeinen Formel (1)

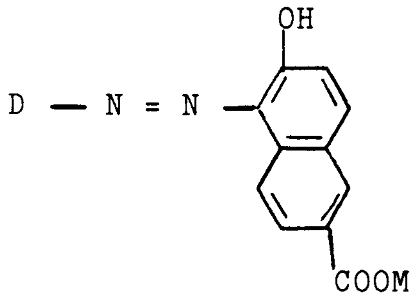

(1)

entspricht, in welcher bedeuten:

- M ist ein Wasserstoffatom oder ein Alkalimetall;
- D ist eine Gruppe der allgemeinen Formel (2a) oder (2c)

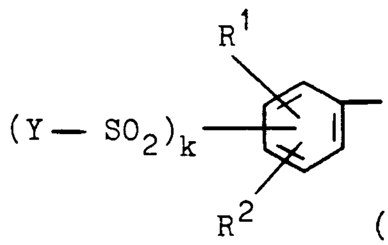

(2a)

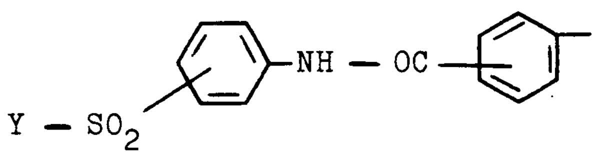

(2c)

in welchen

- $R^1$ ein Wasserstoffatom, die Cyangruppe, eine Alkylgruppe von 1 bis 4 C-Atomen ist, die durch eine Sulfo-, Carboxy- oder Sulfatogruppe substituiert sein kann, oder eine Hydroxygruppe, eine Alkoxygruppe von 1 bis 4 C-Atomen, die durch eine Sulfo-, Carboxy-oder Sulfatogruppe substituiert sein kann, eine Sulfogruppe, eine Carboxygruppe, ein Halogenatom oder eine Gruppe der allgemeinen Formel (3)

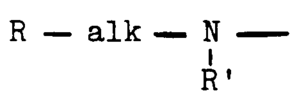

(3)

  ist, in welcher
  alk eine Alkylengruppe von 2 bis 4 C-Atomen ist,
  R für die Sulfo-, Carboxy-, Sulfato- oder Phosphatogruppe steht und
  $R'$ ein Wasserstoffatom oder die Methyl- oder Ethylgruppe ist,
- $R^2$ ein Wasserstoffatom oder eine Alkoxygruppe von 1 bis 4 C-Atomen oder eine Alkylgruppe von 1 bis 4 C-Atomen oder eine Sulfogruppe ist,
- Y für die Vinylgruppe steht oder für eine Ethylgruppe, die in $\beta$-Stellung einen durch ein Alkali unter Bildung der Vinylgruppe eliminierbaren Substituenten enthält, und
- k die Zahl 1 oder 2 bedeutet, bevorzugt 1 ist.

**2.** Verbindung nach Anspruch 1, dadurch gekennzeichnet, daß $R^1$ und $R^2$ beide ein Wasserstoffatom bedeuten.

3. Verbindung nach Anspruch 1 oder 2, dadurch gekennzeichnet, daß Y die Vinylgruppe oder die β-Sulfatoethyl- oder β-Thiosulfatoethyl-Gruppe, ist.

4. Verbindung nach Anspruch 1 oder 2, dadurch gekennzeichnet, daß Y die β-Sulfatoethyl-Gruppe ist.

5. Verbindung nach Anspruch 1, dadurch gekennzeichnet, daß D der 4-(β-Sulfatoethylsulfonyl)-phenyl-Rest ist.

6. Verbindung nach Anspruch 1, dadurch gekennzeichnet, daß D der 2-Sulfo-4-(β-sulfatoethylsulfonyl)-phenyl-Rest ist.

7. Verbindung nach Anspruch 1, dadurch gekennzeichnet, daß D der 2-Sulfo-5-(β-sulfatoethylsulfonyl)-phenyl-Rest ist.

8. Verfahren zur Herstellung einer Verbindung von Anspruch 1, dadurch gekennzeichnet, daß man die Diazoniumverbindung eines aromatischen Amins der allgemeinen Formel (4a) oder (4c)

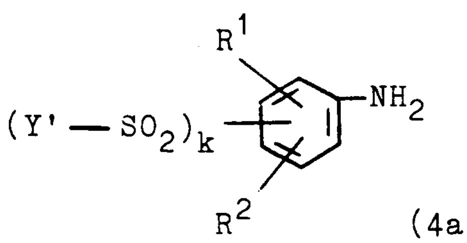

(4a)

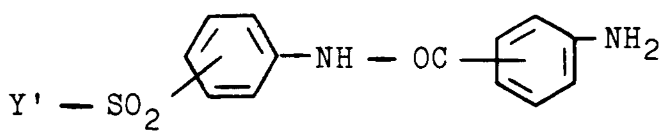

(4c)

in welchen $R^1$, $R^2$ und k die in Anspruch 1 genannten Bedeutungen haben und Y′ eine der für Y genannten Bedeutungen besitzt oder die β-Hydroxyethyl-Gruppe ist, mit einer Verbindung der allgemeinen Formel (5)

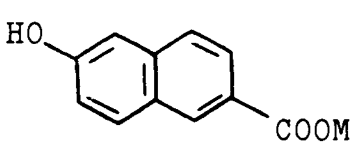

(5)

in welcher M die in Anspruch 1 genannte Bedeutung besitzt, kuppelt und im Falle, daß Y′ eine β-Hydroxyethyl-Gruppe bedeutet, die gebildete Azoverbindung mit dieser β-Hydroxyethylsulfonyl-Gruppe in eine Azoverbindung entsprechend der allgemeinen Formel (1) mit Y gleich einer Ethylgruppe, die in β-Stellung einen anorganischen oder organischen Esterrest enthält, überführt.

9. Verwendung einer Verbindung von mindestens einem der Ansprüche 1 bis 7, zum Färben (einschließlich Bedrucken) von hydroxy- und/oder carbonamidgruppenhaltigem Material, insbesondere Fasermaterial.

10. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und

ihn mittels Wärme und/oder mittels eines säurebindenden Mittels fixiert, dadurch gekennzeichnet, daß man als Farbstoff eine Verbindung von mindestens einem der Ansprüche 1 bis 7 einsetzt.

**Claims**

**1.** A compound which corresponds to the formula (1)

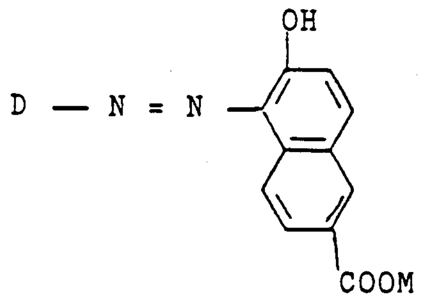

(1)

in which the symbols have the following meanings:

M is a hydrogen atom or an alkali metal;

D is a group of the formula (2a) or (2c)

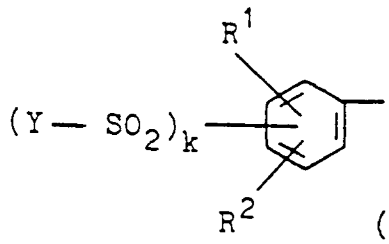

(2a)

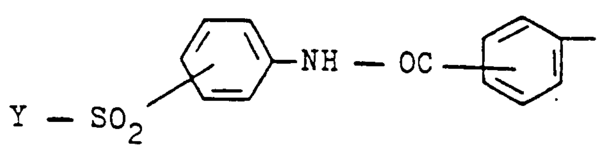

(2c)

in which

$R^1$ is a hydrogen atom, the cyano group or an alkyl group having 1 to 4 carbon atoms which can be substituted by a sulfo, carboxyl or sulfato group, or is a hydroxyl group, an alkoxy group having 1 to 4 carbon atoms which can be substituted by a sulfo, carboxyl or sulfato group, a sulfo group, a carboxyl group, a halogen atom or is a group of the formula (3)

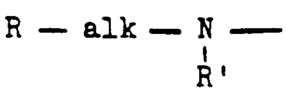

(3)

in which

alk is an alkylene group having 2 to 4 carbon atoms,

R stands for the sulfo, carboxyl, sulfato or phosphato group and

R' is a hydrogen atom or is the methyl or ethyl group,

$R^2$ is a hydrogen atom or an alkoxy group having 1 to 4 carbon atoms or is an alkyl group having

1 to 4 carbon atoms or is a sulfo group,

Y stands for the vinyl group or for an ethyl group which, in the β-position, contains a substituent which can be eliminated by an alkali with the formation of the vinyl group, and

k denotes the number 1 or 2, preferably 1.

**2.** The compound as claimed in claim 1, wherein $R^1$ and $R^2$ both denote a hydrogen atom.

**3.** The compound as claimed in claim 1 or 2, wherein Y is the vinyl group or the β-sulfatoethyl or β-thiosulfatoethyl group.

**4.** The compound as claimed in claim 1 or 2, wherein Y is the β-sulfatoethyl group.

**5.** The compound as claimed in claim 1, wherein D is the 4-(β-sulfatoethylsulfonyl)phenyl radical.

**6.** The compound as claimed in claim 1, wherein D is the 2-sulfo-4-(β-sulfatoethylsulfonyl)phenyl radical.

**7.** The compound as claimed in claim 1, wherein D is the 2-sulfo-5-(β-sulfatoethylsulfonyl)phenyl radical.

**8.** A process for preparing a compound of claim 1, which comprises coupling the diazonium compound of an aromatic amine of the formula (4a) or (4c)

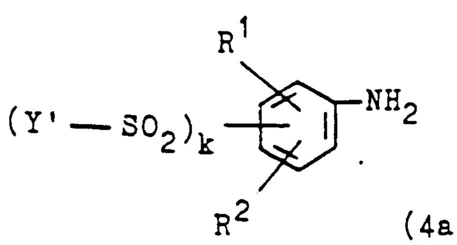

(4a)

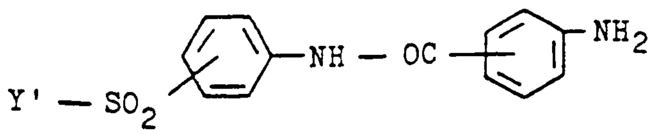

(4c)

in which $R^1$, $R^2$ and k have the meanings mentioned in claim 1, and Y' has one of the meanings mentioned for Y or is the β-hydroxyethyl group, with a compound of the formula (5)

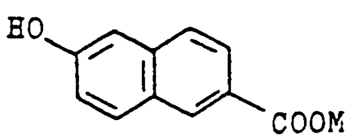

(5)

in which M has the meaning mentioned in claim 1 and, in the case where Y' denotes a β-hydroxyethyl group, converting the azo compound formed having this β-hydroxyethylsulfonyl group to an azo compound according to the formula (1) in which Y is an ethyl group which contains an inorganic or organic ester radical in the β-position.

**9.** The use of a compound of at least one of claims 1 to 7 for dyeing (including printing) hydroxyl- and/or carboxamido-containing material, in particular fiber material.

**10.** A process for dyeing (including printing) hydroxyl-and/or carboxamido-containing material, in particular

fiber material, in which a dyestuff is applied to the material and fixed by means of heat and/or by means of an acid-binding agent, which comprises using a compound of at least one of claims 1 to 7 as the dyestuff.

## Revendications

**1.** Composé répondant à la formule générale (1) :

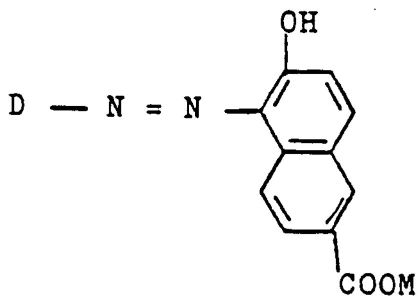

(1)

dans laquelle :

M représente un atome d'hydrogène ou un métal alcalin :

D est un groupe de formule générale (2a) ou (2c),

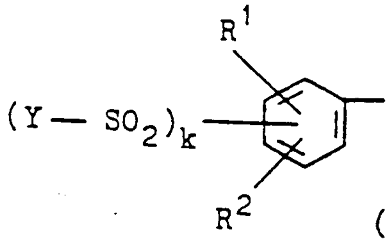

(2a)

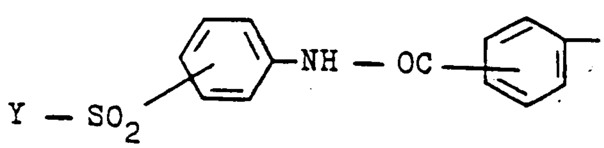

(2c)

dans lesquelles :

$R^1$ représente un atome d'hydrogène, le groupe cyano, un groupe alkyle ayant 1 à 4 atomes de carbone (qui peut être substitué par un groupe sulfo, carboxy ou sulfato) ou un groupe hydroxyle, un groupe alcoxy ayant 1 à 4 atomes de carbone (qui peut être substitué par un groupe sulfo, carboxy ou sulfato), un groupe sulfo, un groupe carboxy, un atome d'halogène ou un groupe de formule générale (3) :

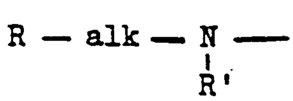

(3)

dans laquelle :

alk représente un groupe alkylène ayant 2 à 4 atomes de carbone,

R représente le groupe sulfo, carboxy, sulfato ou phosphato, et

R' représente un atome d'hydrogène ou le groupe méthyle ou éthyle,

$R^2$ représente un atome d'hydrogène ou un groupe alcoxy ayant 1 à 4 atomes de carbone ou un

groupe alkyle ayant 1 à 4 atomes de carbone ou un groupe sulfo,

Y représente le groupe vinyle ou un groupe éthyle, qui contient en position bêta un substituant, éliminable sous l'effet d'une substance alcaline en formant le groupe vinyle, et

k représente le nombre 1 ou 2, de préférence k vaut 1.

**2.** Composé selon la revendication 1, caractérisé en ce que $R^1$ et $R^2$ représentent tous deux chacun un atome d'hydrogène.

**3.** Composé selon la revendication 1 ou 2, caractérisé en ce que Y représente le groupe vinyle ou le groupe bêta-sulfatoéthyle ou bêta-thiosulfatoéthyle.

**4.** Composé selon la revendication 1 ou 2, caractérisé en ce que Y représente le groupe bêta-sulfatoéthyle.

**5.** Composé selon la revendication 1, caractérisé en ce que D représente le reste 4-(bêta-sulfatoéthylsulfonyl)-phényle.

**6.** Composé selon la revendication 1, caractérisé en ce que D représente le reste 2-sulfo-4-(bêta-sulfatoéthylsulfonyl)-phényle

**7.** Composé selon la revendication 1, caractérisé en ce que D représente le reste 2-sulfo-5-(bêta-sulfatoéthylsulfonyl)-phényle

**8.** Procédé pour préparer un composé selon la revendication 1, caractérisé en ce qu'on copule le composé de diazonium dérivant d'une amine aromatique de formule générale (4a) ou (4c) :

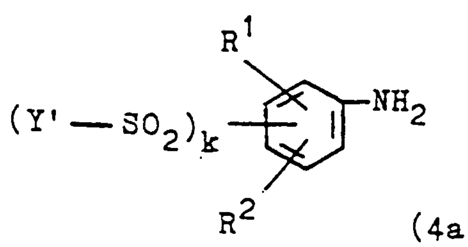

(4a)

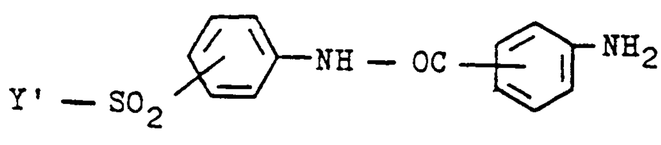

(4c)

(dans lesquelles $R^1$, $R^2$ et k ont les sens indiqués à la revendication 1, et Y' a l'un des sens indiqués pour Y ou représente le groupe bêta-hydroxyéthyle) avec un composé de formule générale (5) :

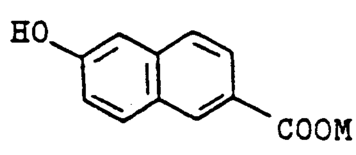

(5)

(dans laquelle M a le sens indiqué à la revendication 1) et, si Y' représente un groupe bêta-hydroxyéthyle, on transforme le composé azoïque formé, comportant ce groupe bêta-hydroxyéthylsulfonyle, en un composé azoïque répondant à la formule générale (1), dans laquelle Y représente un groupe éthyle, qui contient en position bêta un reste ester d'acide minéral ou organique.

**9.** Utilisation d'un composé selon l'une au moins des revendications 1 à 7 pour teindre (ce qui comprend l'impression) une matière contenant des groupes hydroxyles et/ou carboxamides, en particulier une matière fibreuse.

**10.** Procédé pour teindre (ce qui comprend l'impression) une matière contenant des groupes hydroxyles et/ou carboxamides, en particulier une matière fibreuse, selon lequel on applique un colorant sur la matière et on le fixe à l'aide de la chaleur et/ou à l'aide d'un agent de fixation des acides, procédé caractérisé en ce qu'on utilise comme colorant un composé répondant à l'une au moins des revendications 1 à 7.